# EUROPÄISCHE PATENTANMELDUNG

(11) **EP 2 560 028 A2**
(43) Veröffentlichungstag der Anmeldung: **20.02.2013**
(21) Anmeldenummer: 12171754.0
(22) Anmeldetag: 13.06.2012
(51) Int. Cl.: G01V 3/165

(54) **Verfahren und Vorrichtung zum Detektieren eines Objektes in einem Untergrund**

(30) Priorität: 15.07.2011 DE 102011079258
(71) Anmelder: HILTI Aktiengesellschaft, 9494 Schaan (LI)
(72) Erfinder: Haldner, Patrick, 9494 Schaan (LI); Wuersch, Christoph, 9470 Werdenberg (CH); Kaneider, Wilfried, 6830 Rankweil (AT); Schoenbeck, Dietmar, 6811 Göfis (AT); Korl, Sascha, 9470 Buchs (CH)

(57) **Zusammenfassung**

Verfahren und Vorrichtung zum Detektieren eines Objektes in einem Untergrund, wobei die Vorrichtung eine Sensoreinheit (44) mit einem Sensorelement (48.1) und mindestens einem weiteren Sensorelement (48.2, 48.3), eine Steuer- und Auswerteeinheit (46) und eine Anzeigeeinheit (26) aufweist. Das Verfahren zum Detektieren eines Objektes in einem Untergrund ist gekennzeichnet durch gleichzeitiges Empfangen eines Empfangssignals (52.1) und mindestens eines weiteren Empfangssignals (52.2-52.5) sowie gleichzeitiges Berechnen eines Tiefenschnittbildes (69.1) aus dem Empfangssignal (52.1) und mindestens eines weiteren Tiefenschnittbildes (69.2-69.5) aus dem mindestens einen weiteren Empfangssignal (52.2-52.5) durch die Steuer- und Auswerteeinheit (46).

## Beschreibung

### Technisches Gebiet

Die vorliegende Erfindung betrifft ein Verfahren zum Detektieren eines Objektes in einem Untergrund mit den Merkmalen gemäß dem Oberbegriff des Anspruchs 1 sowie eine Vorrichtung zum Detektieren eines Objektes in einem Untergrund mit den Merkmalen gemäß dem Oberbegriff des Anspruchs 10.

Typische Objekte, die in Untergründen detektiert werden, sind Wasserrohre, Armierungseisen, Elektro- und Stromleitungen, Feuchtigkeitsansammlungen und Hohlräume. Unter dem Begriff "Objekt" sind im Rahmen dieser Patentanmeldung beliebige feste, flüssige und gasförmige Objekte, die in Untergründen eingebettet sind, zusammengefasst. Stromleitungen müssen aufgrund der Unfallgefahr beim Durchtrennen einer Stromleitung mit einer hohen Zuverlässigkeit von einer Detektionsvorrichtung erkannt werden. Eine Stromleitung ist eine stromführende Elektroleitung, die im Betrieb ein magnetisches Feld erzeugt, das zum Detektieren der Stromleitung genutzt werden kann. Telefon- oder Antennenkabel stellen zwar E-lektroleitungen dar, führen aber nur einen sehr geringen Strom und fallen nicht unter die Definition des Begriffes "Stromleitung", wie er im Rahmen dieser Patentanmeldung verwendet wird.

### Stand der Technik

DE 102 05 002 A1 offenbart ein Verfahren und eine Vorrichtung zum Detektieren eines Objektes in einem Untergrund. Die Detektionsvorrichtung umfasst eine Sensoreinheit, eine Steuer- und Auswerteeinheit und eine Anzeigeeinheit. Die Steuer- und Auswerteeinheit ist über eine erste und zweite Echtzeit-Kommunikationsverbindung mit der Sensoreinheit und der Anzeigeeinheit verbunden. Dabei umfasst der Begriff "Echtzeit-Kommunikationsverbindung" neben Kommunikationsverbindungen ohne zeitliche Verzögerung auch Kommunikationsverbindungen, bei denen die zeitliche Verzögerung zwischen der Erfassung der Empfangssignale durch die Sensoreinheit und der Darstellung eines Tiefenschnittbildes auf der Anzeigeeinheit so klein ist, dass das Tiefenschnittbild auf der Anzeigeeinheit im Wesentlichen ein Tiefenschnittbild durch den Untergrund an der aktuellen Position der Sensoreinheit wiedergibt.

Die Detektionsvorrichtung wird in parallelen, linearen Messbahnen über die Oberfläche des Untergrundes geführt. Die von der Sensoreinheit erfassten Empfangssignale werden während der Abtastung weiterer Schnittlinien über die erste Echtzeit-Kommunikationsverbindung an die Steuer- und Auswerteeinheit übertragen, die ein Tiefenschnittbild des Untergrundes berechnet. Das Tiefenschnittbild wird über die zweite Echtzeit-Kommunikationsverbindung während der Abtastung weiterer Schnittlinien von der Steuer- und Auswerteeinheit an die Anzeigeeinheit übertragen, die das Tiefenschnittbild durch den Untergrund auf der Anzeigeeinheit darstellt. Um die Übersichtlichkeit und die räumliche Orientierung für den Bediener zu verbessern, enthält das Tiefenschnittbild unter anderem eine Tiefenskala und Grafikmuster zur Darstellung der Objekte.

Nachteilig ist, dass die Detektionsvorrichtung in mehreren parallelen Messbahnen über die Oberfläche des Untergrundes geführt werden muss, um eine gewisse Fläche des Untergrundes zu erfassen. Die Tiefenschnittbilder der einzelnen Messbahnen werden zwar in quasi Echtzeit auf der Anzeigeeinheit dargestellt, allerdings werden die Tiefenschnittbilder der parallelen Messbahnen nicht gleichzeitig dargestellt, so dass der Bediener keine räumliche Zuordnung erhält, wo sich die Objekte im Untergrund befinden.

### Darstellung der Erfindung

Die Aufgabe der vorliegenden Erfindung besteht demgegenüber darin, ein Verfahren und eine Vorrichtung zum Detektieren eines Objektes in einem Untergrund dahingehend weiterzuentwickeln, dass der Bediener eine räumliche Zuordnung erhält, wo sich die Objekte im Untergrund befinden. Außerdem soll der Aufwand beim Detektieren für den Bediener reduziert werden.

Diese Aufgabe wird bei dem eingangs genannten Verfahren zum Detektieren eines Objektes in einem Untergrund erfindungsgemäß durch die Merkmale des unabhängigen Anspruchs 1 und bei der eingangs genannten Vorrichtung zum Detektieren eines Objektes in einem Untergrund erfindungsgemäß durch die Merkmale des unabhängigen Anspruchs 10 gelöst. Vorteilhafte Ausgestaltungen ergeben sich aus den abhängigen Ansprüchen.

Das Verfahren zum Detektieren eines Objektes in einem Untergrund ist erfindungsgemäß gekennzeichnet durch die weiteren Schritte gleichzeitiges Empfangen mindestens eines weiteren Empfangssignals durch ein weiteres Sensorelement der Sensoreinheit und gleichzeitiges Berechnen mindestens eines weiteren Tiefenschnittbildes aus dem mindestens einen weiteren Empfangssignal durch die Steuer- und Auswerteeinheit. Dadurch, dass gleichzeitig mit dem Empfangssignal ein weiteres Empfangssignal empfangen wird, kann die Steuer- und Auswerteeinheit mindestens ein weiteres Tiefenschnittbild berechnen. Während einer Vorschubbewegung der Detektionsvorrichtung über den Untergrund werden mehrere Tiefenschnittbilder berechnet und auf der Anzeigeeinheit dargestellt, so dass der Aufwand beim Detektieren für den Bediener reduziert ist.

Bevorzugt wird aus den Tiefenschnittbildern eine Draufsicht berechnet und auf der Anzeigeeinheit dargestellt, wobei die Draufsicht als Mittelwert, Median, Maximalwert oder gewichtete Summe über einen Tiefenbereich zwischen einer ersten Tiefe und einer zweiten Tiefe berechnet wird. Aus der Draufsicht erhält der Bediener einen direkten räumlichen Eindruck, wo sich die Objekte im Untergrund befinden. Besonders bevorzugt sind die erste und zweite Tiefe verstellbar, so dass der Bediener die in der Draufsicht dargestellten Objekte auf bestimmte Tiefenbereiche beschränken kann.

In der Draufsicht werden besonders bevorzugt nur Objekte dargestellt, die einen Schwellwert überschreiten, wobei der Schwellwert bevorzugt verstellbar ist. Die Verstellbarkeit des Schwellwertes ermöglicht es dem Bediener, die Darstellung der Draufsicht an seine Anforderungen anzupassen. Artefakte und Störungen können über den Schwellwert eliminiert werden, so dass in der Draufsicht nur die Objekte dargestellt werden, die der Bediener darstellen möchte.

Besonders bevorzugt werden die Tiefenschnittbilder interpoliert. Durch die Interpolation der Tiefenschnittbilder kann die Auflösung der Objekte in der Draufsicht erhöht werden. Die Interpolation eignet sich beispielsweise für geführte Detektionsvorrichtungen, die in einer linearen Vorschubbewegung über den Untergrund bewegt werden. In einer horizontalen Richtung senkrecht zu einer Vorschubrichtung ist die Auflösung der Objekte im Wesentlichen durch die Anzahl der Sensorelemente festgelegt, wohingegen in Vorschubrichtung eine hohe Abtastung erfolgt, die zu einer hohen Auflösung der Objekte führt. Durch die Interpolation der Tiefenschnittbilder kann die Auflösung in der horizontalen Richtung erhöht werden.

In einer bevorzugten Ausführungsform werden weitere Empfangssignale durch Sensorelemente einer weiteren Sensoreinheit empfangen. Durch die Verwendung mehrerer Sensoreinheiten mit unterschiedlichen Sensoreigenschaften zum Empfangen von Empfangssignalen der Objekte können die Qualität und Zuverlässigkeit der Messung erhöht werden. Unter dem Begriff "Sensoreigenschaft" sind alle Eigenschaften von Sensoreinheiten, wie Größe, Position, Orientierung, Sensortyp zusammengefasst. Zu den Sensoreigenschaften gehören bei Radarsensoren weitere Sensoreigenschaften, wie Polarisation (linear, zirkular, parallel, senkrecht), Bandbreite, Frequenzband, Modulationsart, und bei induktiven Sensoren weitere Sensoreigenschaften, wie Amplitude, Frequenzbereich, Erregungsmuster, Empfindlichkeit, Bandbreite.

In einer bevorzugten Verfahrensvariante wird die Sensoreinheit in einer ersten Vorschubrichtung und einer zweiten Vorschubrichtung in parallelen Messbahnen über den Untergrund bewegt, wobei in der ersten und zweiten Vorschubrichtung aus den Empfangssignalen mehrere Tiefenschnittbilder berechnet werden. Dabei wird besonders bevorzugt aus den Tiefenschnittbildern der ersten und zweiten Vorschubrichtung eine gemeinsame Draufsicht berechnet und auf der Anzeigeeinheit dargestellt. Dadurch, dass aus den Tiefenschnittbildern der einzelnen Messbahnen eine gemeinsame Draufsicht berechnet und auf der Anzeigeeinheit dargestellt wird, können auch größere Flächenbereiche detektiert und in einer gemeinsamen Messaufnahme dargestellt werden.

Aus den Empfangssignalen der Sensoreinheit und den Empfangssignalen der weiteren Sensoreinheit werden in einer ersten Variante durch die Steuer- und Auswerteeinheit gemeinsame Tiefenschnittbilder und aus den gemeinsamen Tiefenschnittbildern eine gemeinsame Draufsicht berechnet. Gemeinsame Tiefenschnittbilder und eine gemeinsame Draufsicht haben den Vorteil, dass alle Objekte in einer Darstellung angezeigt werden. Außerdem wird die Zuverlässigkeit beim Detektieren einer Objektart erhöht, wenn die Objektart auf verschiedene Arten detektiert wurde.

Aus den Empfangssignalen der Sensoreinheit und den Empfangssignalen der weiteren Sensoreinheit werden in einer zweiten Variante durch die Steuer- und Auswerteeinheit getrennte Tiefenschnittbilder und aus den getrennten Tiefenschnittbildern getrennte Draufsichten berechnet. Getrennte Tiefenschnittbilder und eine getrennte Draufsicht haben den Vorteil, dass Darstellungs- und Berechnungsparameter für die Tiefenschnittbilder und die Draufsicht an den Tiefenbereich und die zu detektierenden Objekte angepasst werden können.

Bei der Vorrichtung zum Detektieren eines Objektes in einem Untergrund ist erfindungsgemäß vorgesehen, dass die Sensoreinheit mindestens ein weiteres Sensorelement aufweist und die Steuer- und Auswerteeinheit ausgebildet ist, aus den Empfangssignalen der Sensorelemente gleichzeitig Tiefenschnittbilder zu berechnen. Eine Sensoreinheit mit mehreren Sensorelementen ermöglicht es, dass gleichzeitig mehrere Empfangssignale aufgenommen und von der Steuer- und Auswerteeinheit parallele Tiefenschnittbilder berechnet werden.

Bevorzugt ist die Steuer- und Auswerteeinheit ausgebildet, aus den Tiefenschnittbildern eine Draufsicht als Mittelwert, Median, Maximalwert oder gewichtete Summe über einen Tiefenbereich zwischen einer ersten Tiefe und einer zweiten Tiefe zu berechnen und auf der Anzeigeeinheit darzustellen, wobei die erste Tiefe und die zweite Tiefe besonders bevorzugt verstellbar ausgebildet sind. Neben den genannten mathematischen Funktionen, Mittelwert, Median, Maximalwert und gewichtete Summe, kann jede geeignete mathematische Funktion dazu verwendet werden, die Draufsicht zu berechnen. Aus der Draufsicht erhält der Bediener eine direkte räumliche Zuordnung der Objekte zum Untergrund. Durch die Verstellbarkeit der ersten und zweiten Tiefe können Objekte, die in verschiedenen Tiefen in den Untergrund eingebettet sind, getrennt voneinander in der Draufsicht dargestellt werden. Der Bediener kann die in der Draufsicht dargestellten Objekte auf verschiedene Tiefenbereiche beschränken.

Bevorzugt ist ein horizontaler Flächenbereich, in dem die Draufsicht dargestellt ist, verstellbar ausgebildet, wobei der Flächenbereich in einer ersten und zweiten horizontalen Richtung getrennt verstellbar ist. Die Verstellbarkeit des horizontalen Flächenbereiches ermöglicht es dem Bediener, die Draufsicht auf den Flächenbereich zu beschränken, der ihn interessiert. Da die Größe der Anzeigeeinheit begrenzt ist, kann der Maßstab der Draufsicht an den eingestellten horizontalen Flächenbereich angepasst werden.

In einer bevorzugten Ausführungsform sind mindestens ein Tiefenschnittbild und die Draufsicht gleichzeitig auf der Anzeigeeinheit darstellbar. Dabei ist das auf der Anzeigeeinheit dargestellte Tiefenschnittbild besonders bevorzugt über eine Schaltwippe verstellbar, wobei die Position der Schaltwippe in der Draufsicht dargestellt ist. Der Bediener kann mit Hilfe der Schalfiniippe zwischen den Tiefenschnittbildern hin- und herwechseln. Dadurch, dass die Position der Schaltwippe in der Draufsicht dargestellt ist, ist dem Bediener bekannt, an welcher Stelle er das Tiefenschnittbild betrachtet.

In einer bevorzugten Ausführungsform sind eine erste Sensoreinheit mit ersten Sensorelementen und eine zweite Sensoreinheit mit zweiten Sensorelementen vorgesehen, wobei sich die zweiten Sensorelemente in mindestens einer Sensoreigenschaft von den ersten Sensorelementen unterscheiden. Durch die Verwendung unterschiedlicher Sensortypen oder die Verwendung eines Sensortyps mit unterschiedlichen Sensoreigenschaften können verschiedene Objekte oder Objekte in unterschiedlichen Tiefen des Untergrundes zuverlässig detektiert werden. Beispielsweise detektieren induktive Sensoren in Form von Spulen bei einem kleinen Spulendurchmesser zuverlässig oberflächennahe und eng aneinanderliegende Objekte (geringe Separation), wohingegen Spulen mit einem großen Spulendurchmesser zuverlässig oberflächenferne Objekte detektieren. Durch die Kombination von kleinen und großen Spulen werden sowohl oberflächennahe als auch oberflächenferne Objekte zuverlässig detektiert. In Abhängig vom Einsatzgebiet der Detektionsvorrichtung können alle bekannten Sensorelemente miteinander kombiniert werden.

Besonders bevorzugt sind die erste Sensoreinheit zur Detektion eines beliebigen Objektes und die zweite Sensoreinheit zur Detektion einer Stromleitung ausgebildet. Stromleitungen müssen aufgrund der Unfallgefahr beim Durchtrennen einer Stromleitung mit hoher Zuverlässigkeit von einer Detektionsvorrichtung erkannt werden. Durch die zweite Sensoreinheit, die ausschließlich zur Detektion von Stromleitungen vorgesehen ist, wird die Zuverlässigkeit beim Detektieren einer Stromleitung erhöht. Mit Hilfe der ersten Sensoreinheit kann beispielsweise die räumliche Anordnung der Objekte im Untergrund bestimmt werden und mit Hilfe der zweiten Sensoreinheit wird bestimmt, bei welchen Objekten es sich um Stromleitungen handelt.

Besonders bevorzugt sind in einem ersten Anzeigemodus die Messergebnisse der ersten Sensoreinheit, in einem zweiten Anzeigemodus die Messergebnisse der zweiten Sensoreinheit und in einem dritten Anzeigemodus die Messergebnisse der ersten und zweiten Sensoreinheit auf der Anzeigeeinheit darstellbar. Bei Detektionsvorrichtungen, die zwei verschiedene Sensoreinheiten aufweisen, berechnet die Steuer- und Auswerteeinheit gemeinsame Tiefenschnittbilder und/oder getrennte Tiefenschnittbilder. Aus den gemeinsamen Tiefenschnittbildern wird eine gemeinsame Draufsicht berechnet und auf der Anzeigeeinheit dargestellt. Gemeinsame Tiefenschnittbilder und eine gemeinsame Draufsicht haben den Vorteil, dass alle Objekte in einer Darstellung angezeigt werden. Getrennte Tiefenschnittbilder und daraus berechnete getrennte Draufsichten können gleichzeitig oder nacheinander auf der Anzeigeeinheit angezeigt werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

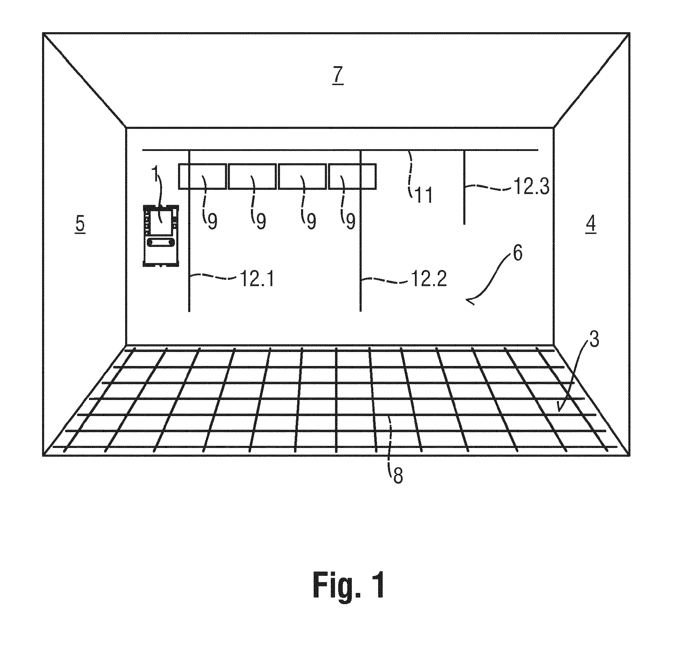

- FIG. 1: die Anwendung einer erfindungsgemäßen Detektionsvorrichtung in einem Innenraum, der einen Betonboden mit einem eingebetteten Eisengitter und eine gemauerte Rückwand aus Ziegelsteinen mit horizontal und vertikal verlaufenden Stromleitungen aufweist;

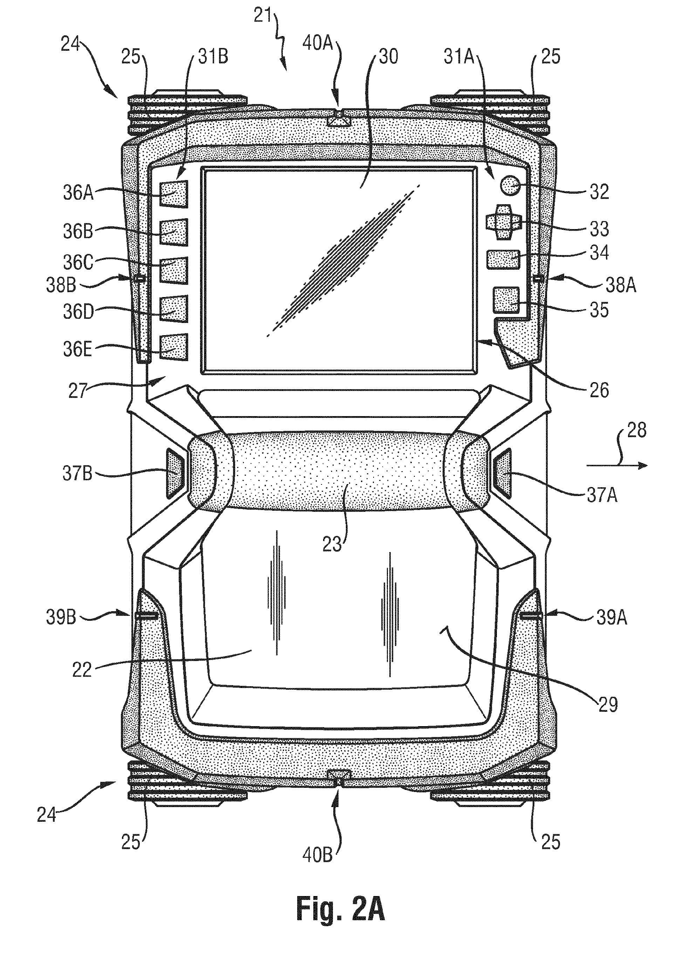

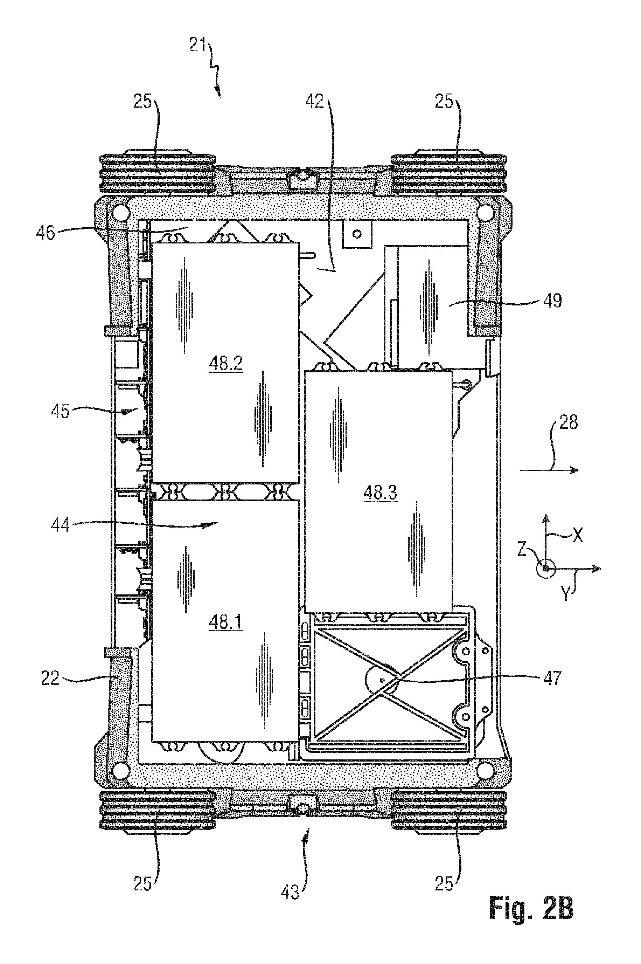

- FIG. 2A,B: eine erste Ausführungsform einer erfindungsgemäßen, handgeführten Detektionsvorrichtung in einer Ansicht auf eine dem zu detektierenden Untergrund abgewandten Oberseite der Detektionsvorrichtung (FIG. 2A) und eine im Inneren angeordnete Messeinrichtung mit einer ersten Sensoreinheit und einer zweiten Sensoreinheit in einer Ansicht auf eine dem zu detektierenden Untergrund zugewandten Unterseite der Detektionsvorrichtung (FIG. 2B);

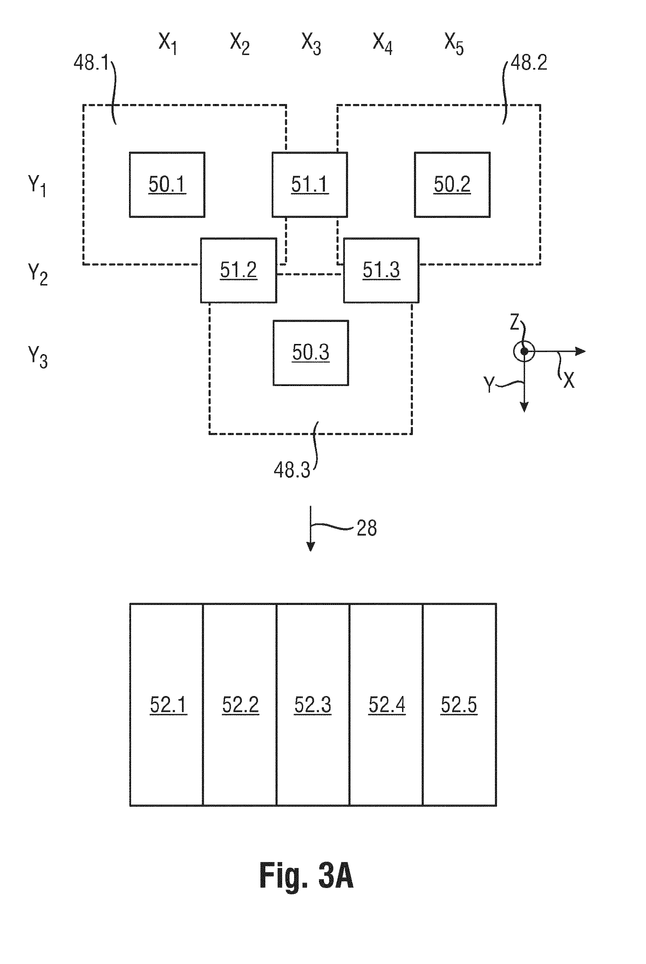

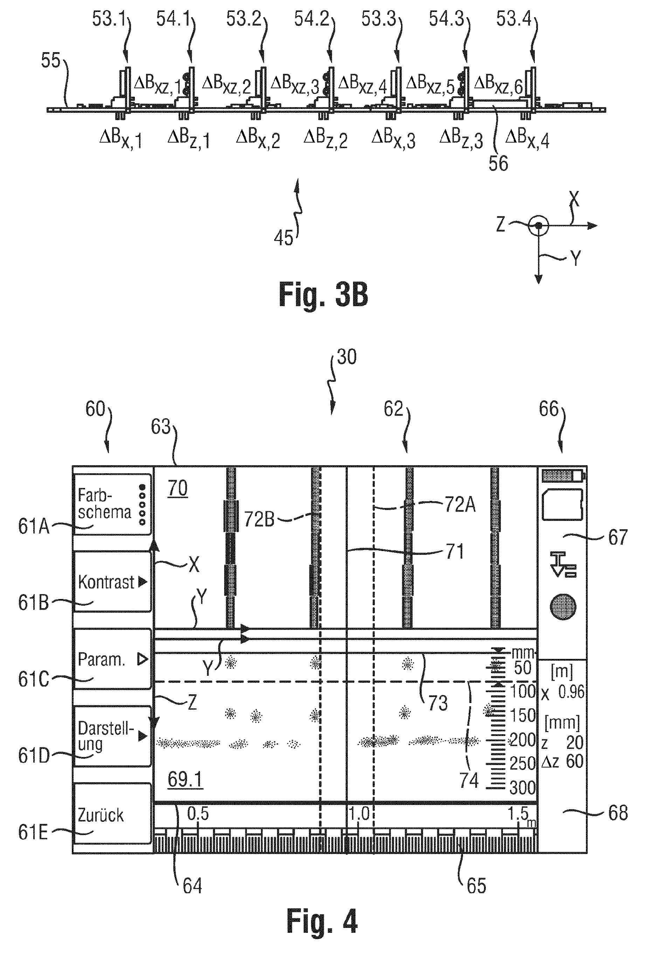

- FIG. 3A, B: die erste Sensoreinheit der FIG. 2B mit drei Sensorelementen in einer schematischen Darstellung (FIG. 3A) und die als Stromsensoreinheit ausgebildete, zweite Sensoreinheit der FIG. 2B mit vier ersten Magnetfeldsensorelementen und drei zweiten Magnetfeldsensorelementen, die einen Magnetfeldgradienten in zwei verschiedenen Richtungen messen (FIG. 3B);
- FIG. 4: eine Messaufnahme der Detektionsvorrichtung der FIG. 2, die in einem ersten Betriebsmodus in einer Vorschubrichtung über den zu detektierenden Untergrund bewegt wird, mit einer Draufsicht und einem Tiefenschnittbild;

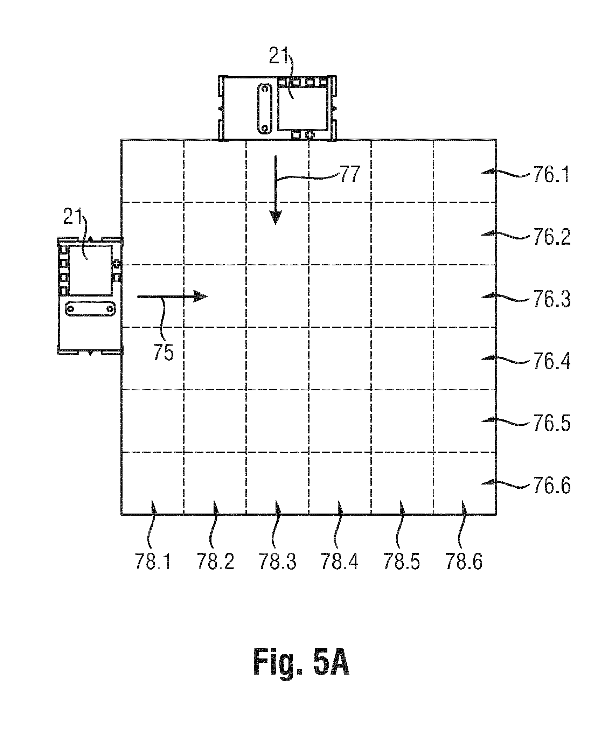

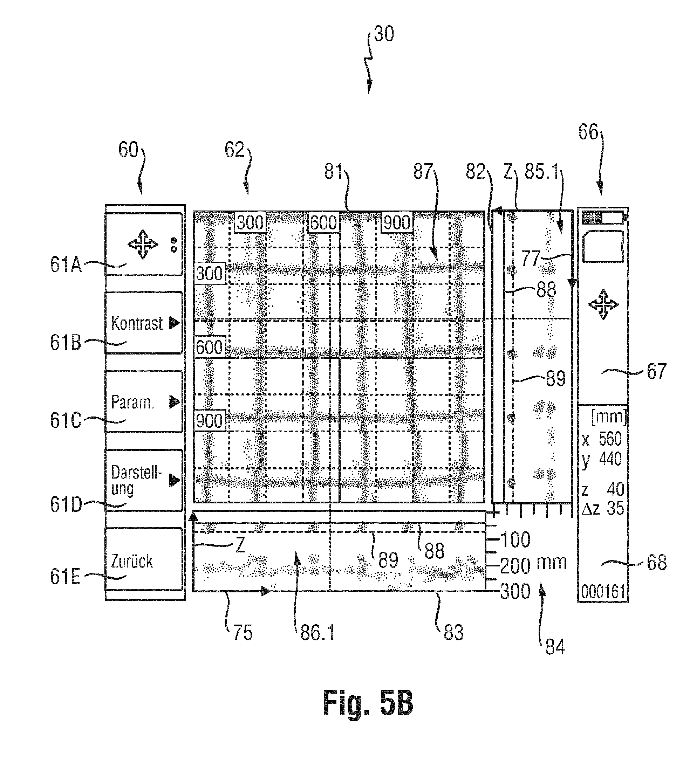

- FIG. 5A, B: die Detektionsvorrichtung der FIG. 2, die in einem zweiten Betriebsmodus in parallelen Messbahnen in zwei senkrechten Vorschubrichtungen über den zu detektierenden Untergrund bewegt wird (FIG. 5A) und eine Messaufnahme der Detektionsvorrichtung im zweiten Betriebsmodus mit einer Draufsicht und zwei Tiefenschnittbildern (FIG. 5B); und

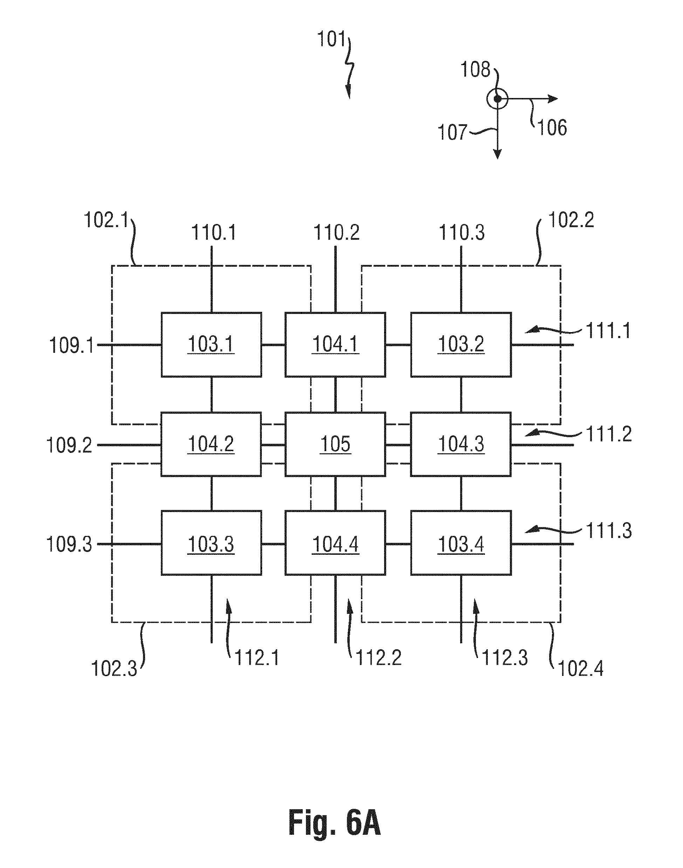

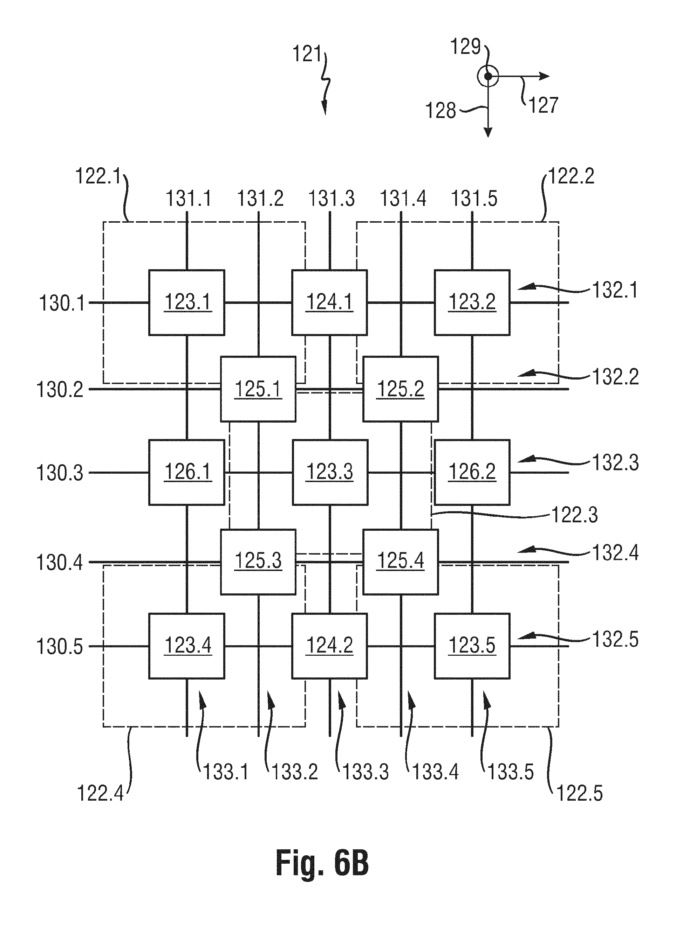

- FIG. 6A, B: eine erste Ausführungsform einer Sensoreinheit für eine gehaltene Detektionsvorrichtung mit vier Sensorelementen, die regelmässig in Reihen und Spalten angeordnet sind (FIG. 6A), und eine zweite Ausführungsform mit fünf Sensorelementen in einer verschachtelten Anordnung (FIG. 6B).

FIG. 1 zeigt die Anwendung einer erfindungsgemäßen Vorrichtung 1 zum Detektieren eines Objektes in einem Innenraum 2. Die Detektionsvorrichtung 1 ist als gehaltene oder geführte Detektionsvorrichtung ausgebildet. Eine gehaltene Detektionsvorrichtung wird ohne Vorschubbewegung über den zu detektierenden Untergrund gehalten und eine geführte Detektionsvorrichtung wird entlang einer linearen Bahn oder in einer beliebigen Bahn über einen zu detektierenden Untergrund geführt. Als handgehalten bzw. handgeführt wird eine Detektionsvorrichtung bezeichnet, die ein Bediener mit der Hand über den zu detektierenden Untergrund hält oder führt.

Der Innenraum 2 besteht aus einem Boden 3, einer rechten und linken Seitenwand 4, 5, einer Rückwand 6 und einer Decke 7. Der Boden 3 besteht aus einer Betondecke mit einem eingebetteten Eisengitter **8.** Die Rückwand 6 ist aus Mauersteinen bzw. Ziegelsteinen **9** aufgebaut. In der Rückwand 7 verlaufen eine horizontal angeordnete Stromleitung **11** und drei vertikal angeordnete Stromleitungen **12.1, 12.2, 12.3,** die von der horizontal angeordneten Stromleitung 11 abzweigen.

**FIG. 2A** zeigt eine erste Ausführungsform einer handgeführten Detektionsvorrichtung **21,** die ein Gehäuse **22,** einen Handgriff **23,** eine Bewegungseinheit **24** mit vier Rädern **25,** eine Anzeigeeinheit **26** und eine Bedienungseinheit **27** umfasst.

Der Benutzer führt die Detektionsvorrichtung 21 mit Hilfe des Handgriffes 23 und der Bewegungseinheit 24 in einer Vorschubrichtung **28** über einen zu detektierenden Untergrund, der beispielsweise als Boden 3 oder Rückwand 6 ausgebildet ist. Der Handgriff 23 ist auf einer dem Untergrund 3, 6 während einer Messung abgewandten Oberseite **29** der Detektionsvorrichtung 21 angeordnet und mit dem Gehäuse 22 verbunden. Die Anzeigeeinheit 26 umfasst ein Display **30,** auf dem die Messergebnisse der Detektionsvorrichtung 21 als Messaufnahme angezeigt werden.

Die Bedienungseinheit 27 dient zum Starten einer Messung und zum Einstellen der Detektionsvorrichtung 21. Die Bedienungseinheit 27 besteht aus einer ersten und zweiten Bedienungseinheit **31A, 31 B,** die neben dem Display 30 auf der Oberseite 29 angeordnet sind. Die erste Bedienungseinheit 31A umfasst eine Ein/Aus-Taste **32** zum Ein- und Ausschalten der Detektionsvorrichtung 21, eine Schaltwippe **33,** mit der eine Markierungslinie oder ein Markierungskreuz in einer Darstellung auf dem Display 30 positioniert und verschoben werden können, sowie zwei weitere Bedienungstasten **34, 35.** Die zweite Bedienungseinheit 31 B umfasst fünf Funktionstasten **36A-36E** zum Aktivieren verschiedener Funktionen eines Funktionsmenüs, das auf dem Display 30 dargestellt ist. Die Bedienungseinheit 27 umfasst außerdem zwei Start/Stop-Tasten **37A, 37B,** die zum Starten und Beenden einer Messung dienen und am Handgriff 23 angeordnet sind.

Das Detektionsfeld der Detektionsvorrichtung 21 ist begrenzt und entspricht nicht der vollen Länge des Gehäuses 22. Die Begrenzung des Detektionsfeldes wird an der rechten Gehäusekante des Gehäuses 22 über eine obere und untere rechte Markierung **38A, 39A** und an der linken Gehäusekante über eine obere und untere linke Markierung **38B, 39B** angezeigt. Mit Hilfe der Markierungen kann der Bediener die Detektionsvorrichtung 21 auf dem zu detektierenden Untergrund platzieren. Die Mitte des Detektionsfeldes wird an der oberen und unteren Gehäusekante über eine obere und untere Markierung **40A, 40B** angezeigt.

**FIG. 2B** zeigt die Detektionsvorrichtung 21 in einer Ansicht auf eine dem Untergrund 3, 6 während einer Messung zugewandte Unterseite **42.** An der Unterseite 42 befindet sich im Inneren des Gehäuses 22 eine Messeinrichtung **43.** Die Messeinrichtung 43 umfasst eine erste Sensoreinheit **44,** eine zweite Sensoreinheit **45,** eine Steuer- und Auswerteeinheit **46** und eine Spannungsquelle **47.**

Die Steuer- und Auswerteeinheit 46 dient zur Steuerung der ersten und zweiten Sensoreinheit 44, 45, zur Auswertung der von den Sensoreinheiten 44, 45 empfangenen Empfangssignale und zur Ausgabe eines Messergebnisses in Form einer Messaufnahme auf der Anzeigeeinheit 26. Die Steuer- und Auswerteeinheit 46 ist über Echtzeit-Kommunikationsverbindungen mit der ersten und zweiten Sensoreinheit 44, 45 und über eine weitere Echtzeit-Kommunikationsverbindung mit der Anzeigeeinheit 26 verbunden. Die Spannungsquelle 47 ist mit der ersten Sensoreinheit 44, der zweiten Sensoreinheit 45, der Steuer- und Auswerteeinheit 46 und der Anzeigeeinheit 26 verbunden und stellt den Einheiten 44, 45, 46, 26 die für den Messbetrieb benötigte elektrische Energie zur Verfügung.

Die erste Sensoreinheit 44 weist ein erstes Sensorelement **48.1,** ein zweites Sensorelement **48.2** und ein drittes Sensorelement **48.3** auf. Die Sensorelemente 48.1-48.3 sind als induktive Sensoren, kapazitive Sensoren, Radarsensoren, Magnetfeldsensoren oder als sonstige, zum Detektieren von Objekten in Untergründen geeignete Sensoren ausgebildet.

Die Sensorelemente 48.1-48.3 sind in einer horizontalen Ebene parallel zur Unterseite des Gehäuses 22 verschachtelt in einer ersten und zweiten Reihe angeordnet. Die horizontale Ebene wird von einer ersten und zweiten horizontalen Richtung **X, Y** aufgespannt, wobei die Y-Richtung parallel zur Vorschubrichtung 28 verläuft. Als **Z**-Richtung ist die zu den horizontalen X- und Y-Richtungen senkrechte Richtung in den Untergrund definiert. Als verschachtelte Anordnung wird eine Anordnung der Sensorelemente 48.1-48.3 bezeichnet, bei der die Sensorelemente nicht regelmäßig in Reihen und Spalten angeordnet sind, sondern die Sensorelemente einer Reihe bzw. Spalte in den Zwischenräumen der vorherigen und der folgenden Reihe bzw. Spalte angeordnet sind. Das erste und zweite Sensorelement 48.1, 48.2 sind in der ersten Reihe und das dritte Sensorelement 48.3 in der zweiten Reihe im Zwischenraum zwischen dem ersten und zweiten Sensorelement 48.1, 48.2 angeordnet.

Die Detektionsvorrichtung 21 wird während der Messung in der Vorschubrichtung 28 mit der Vorschubgeschwindigkeit über den zu detektierenden Untergrund bewegt. Die Messeinrichtung 43 umfasst zusätzlich eine Koordinatenerfassungseinheit **49,** mit der die Koordinaten in der Vorschubrichtung 28 erfasst werden. Bei einer geführten Detektionsvorrichtung, mit der eine beliebige Vorschubbewegung ausgeführt werden kann, werden mit der Koordinatenerfassungseinheit die Koordinaten in der Ebene parallel zur Unterseite des Gehäuses 22 erfasst.

Eine Messung besteht aus einem Messschritt, der mit einer Wiederholfrequenz von 50-5.000 Hz wiederholt wird. Der Messschritt besteht aus drei Teilmessschritten: In einem ersten Teilmessschritt sendet das erste Sensorelement 48.1 ein erstes Sendesignal **TX₁**, aus und die drei Sensorelemente 48.1-48.3 empfangen jeweils ein Empfangssignal **TX₁/RX₁, TX₁/RX₂, TX₁/RX₃.** In einem zweiten Teilmessschritt sendet das zweite Sensorelement 48.2 ein zweites Sendesignal **TX₂** aus und die drei Sensorelemente 48.1-48.3 empfangen jeweils ein Empfangssignal **TX₂/RX₁, TX₂/RX₂, TX₂/RX₃.** In einem dritten Teilmessschritt sendet das dritte Sensorelement 48.3 ein drittes Sendesignal **TX₃** aus und die drei Sensorelemente 48.1-48.3 empfangen jeweils ein Empfangssignal **TX₃/RX₁, TX₃/RX₂, TX₃/RX₃.** Die Sensorelemente 48.1-48.3 werden so über die Steuer- und Auswerteeinheit 46 gesteuert, dass im Sendemodus immer nur ein Sensorelement ein Sendesignal aussendet und im Empfangsmodus alle Sensorelemente 48.1-48.3 ein Empfangssignal empfangen. Bei drei Sensorelementen 48.1, 48.2, 48.3, die ein Sendesignal TX₁, TX₂, TX₃ aussenden, resultieren neun Empfangssignale.

**FIG. 3A** zeigt die erste Sensoreinheit 44 mit den drei Sensorelementen 48.1, 48.2, 48.3 in einer schematischen Darstellung, die die räumliche Zuordnung der neun Empfangssignale TXᵢ/RXⱼ, mit i, j = 1, 2, 3 erläutert.

Die neun Empfangssignale TXᵢ/RXⱼ, mit i, j = 1, 2, 3 umfassen drei monostatische Empfangssignale TXᵢ/RXᵢ, mit i = 1, 2, 3 und sechs bistatische Empfangssignale TXᵢ/RXⱼ, mit i, j = 1, 2, 3 und i ≠ j, wobei monostatisch einen Modus bezeichnet, dass ein Sensorelement sendet und gleichzeitig empfängt, und bistatisch einen Modus, dass ein Sensorelement sendet und ein anderes Sensorelement empfängt. Die neun Empfangssignale werden in der XY-Ebene sechs begrenzten Flächenbereichen zugeordnet. Jedem Sensorelement 47.1, 47.2, 47.3 ist ein monostatischer Flächenbereich **50.1, 50.2, 50.3** zugeordnet. Den monostatischen Flächenbereichen 50.1, 50.2, 50.3 werden die monostatischen Empfangssignale TXᵢ/RXᵢ, mit i = 1, 2, 3 zugeordnet. Die monostatischen Flächenbereiche 50.1, 50.2 und 50.3 weisen in der XY-Ebene die Koordinaten X₁/Y₁, X₅/Y₁ und X₃/Y₃ auf.

FIG. 3A zeigt drei weitere begrenzte Flächenbereiche **51.1, 51.2, 51.3,** die als bistatische Flächenbereiche bezeichnet werden. Die bistatischen Empfangssignale TX₁/RX₂ und TX₂/RX₁ werden gemittelt und das gemittelte Signal wird dem bistatischen Flächenbereich 51.1 zugeordnet. Der bistatische Flächenbereich 51.1 ist zwischen dem ersten und zweiten monostatischen Flächenbereich 50.1 und 50.2 angeordnet und weist in der XY-Ebene die Koordinaten X₃/Y₁ auf. Die bistatischen Empfangssignale TX₁/RX₃ und TX₃/RX₁ werden gemittelt und das gemittelte Signal wird dem Flächenbereich 51.2 zugeordnet. Der bistatische Flächenbereich 51.2 ist zwischen dem ersten und dritten monostatischen Flächenbereich 50.1 und 50.3 angeordnet und weist in der XY-Ebene die Koordinaten X₂/Y₂ auf. Die bistatischen Empfangssignale TX₂/RX₃ und TX₃/RX₂ werden gemittelt und das gemittelte Signal wird dem Flächenbereich 51.3 zugeordnet. Der bistatische Flächenbereich 51.3 ist zwischen dem zweiten und dritten monostatischen Flächenbereich 50.2 und 50.3 angeordnet und weist in der XY-Ebene die Koordinaten X₄/Y₂ auf. Neben der Mittelwertbildung kann aus den bistatischen Empfangssignalen beispielsweise ein Median, ein Maximalwert oder eine gewichtete Summe berechnet werden. Unter dem Begriff "gemitteltes Signal" wird ein Signal verstanden, welches durch eine geeignete mathematische Funktion, wie Mittelwert, Median, Maximalwert, gewichtete Summe, aus den bistatischen Empfangssignalen berechnet wird.

Die sechs Flächenbereiche 50.1-50.3, 51.1-51.3, die mit der Vorschubgeschwindigkeit entlang der Vorschubrichtung 28 bewegt werden, bilden fünf Empfangskanäle **52.1, 52.2, 52.3, 52.4, 52.5,** die durch einen Mittelpunkt und eine Breite festgelegt sind. Die Mittelpunkte der Empfangskanäle 52.1-52.5 entsprechen den X-Koordinaten X₁, X₂, X₃, X₄, X₅ und die Breite der Empfangskanäle 52.1-52.5 entspricht der Breite der Flächenbereiche. Durch die Vorschubbewegung der Detektionsvorrichtung 21 in der Vorschubrichtung 28 werden die Y-Koordinaten verändert. Die Koordinatenerfassungseinheit 49 erfasst die Y-Koordinaten der Flächenbereiche 50.1-50.3, 51.1-51.3 bzw. erfasst eine Referenzkoordinate, die in einem bekannten Abstand zu den Flächenbereichen 50.1-50.3, 51.1-51.3 angeordnet ist.

Während der Vorschubbewegung werden die Empfangssignale erfasst und aus den erfassten Empfangssignalen wird bereits ein Teil eines Tiefenschnittbildes berechnet. Dieser Teil des Tiefenschnittbildes wird über die Echtzeit-Kommunikationsverbindung von der Steuerund Auswerteeinheit 46 an die Anzeigeeinheit 26 übertragen. Das Tiefenschnittbild wird während der Vorschubbewegung regelmäßig aktualisiert. Die Empfangskanäle 52.1-52.5 bilden die Spuren, in der die Empfangssignale dargestellt und regelmäßig aktualisiert werden.

**FIG. 3B** zeigt die zweite Sensoreinheit 45 der Detektionsvorrichtung 21 in einer vergrößerten Darstellung. Die zweite Sensoreinheit 45 ist als Stromsensoreinheit zum Detektieren einer Stromleitung ausgebildet und umfasst vier erste Magnetfeldsensorelemente **53.1, 53.2, 53.3, 53.4** und drei zweite Magnetfeldsensorelemente **54.1, 54.2, 54.3,** die abwechselnd auf einer Leiterplatte **55** befestigt sind. Die Leiterplatte 55 dient als Halteelement zur mechanischen Befestigung und zur elektrischen Verbindung für die ersten und zweiten Magnetfeldsensorelemente 53.1-53.4, 54.1-54.3. Auf der Leiterplatte 55 befindet sich ein Anschlusselement **56,** über das die Leiterplatte 55 mit der Steuer- und Auswerteeinheit 46 verbunden ist.

Die ersten Magnetfeldsensorelemente 53.1-53.4 messen einen ersten Magnetfeldgradienten Δ**B**ₓ in der ersten horizontalen Richtung X und die zweiten Magnetfeldsensorelemente 54.1-54.3 messen einen zweiten Magnetfeldgradienten Δ**B**_{z} in der Tiefenrichtung Z. Um bei der Detektion ein homogenes magnetisches Gleichfeld zu eliminieren, sind die ersten und zweiten Magnetfeldsensorelemente 53.1-53.4, 54.1-54.3 als Gradientensensorelemente ausgebildet und berechnen einen Differenzwert Δ**B**ₓ, Δ**B**_{z}. Aus den Differenzwerten ΔBₓ, ΔB_{z} benachbarter erster und zweiter Magnetfeldsensorelemente wird ein mittlerer Betrag Δ**B**_{xz} = sqrt[(ΔBₓ)² + (ΔB)² berechnet. Die in FIG. 3B gezeigte Stromsensoreinheit 45 mit vier ersten Magnetfeldsensorelementen 53.1-53.4 und drei zweiten Magnetfeldsensorelementen 54.1-54.3 liefert sechs Messwerte Δ**B**_{xz,1} - Δ**B**_{xz,6}, die sechs verschiedenen X-Koordinaten entlang der ersten horizontalen Richtung X zugeordnet werden. Aus den Messwerten ΔB_{xz,1} - ΔB_{xz,6} kann die Steuer- und Auswerteeinheit 46 den Verlauf der Stromleitung im Untergrund ermitteln und als eine horizontale Darstellung (XY-Darstellung) des Untergrundes mit der Stromleitung an die Anzeigeeinheit 26 übermitteln.

**FIG. 4** zeigt das Display 30 der Anzeigeeinheit 26 mit einer Messaufnahme der Detektionsvorrichtung 21 in einem ersten Betriebsmodus, in dem die Detektionsvorrichtung 21 in einer linearen Vorschubbewegung entlang der Vorschubrichtung 28 über den Untergrund bewegt wird. Im ersten Betriebsmodus ist die Breite der Messaufnahme in X-Richtung auf die Breite des Detektionsfeldes beschränkt. Die Breite des Detektionsfeldes wird dem Bediener über die oberen und unteren Markierungen 38A, 38B, 39A, 39B auf dem Gehäuse 22 der Detektionsvorrichtung 21 angezeigt. Die Auflösung in X-Richtung ist durch die Anzahl der Empfangskanäle 52.1-52.5 festgelegt.

Die Detektionsvorrichtung 21 weist eine erste Sensoreinheit 44 und eine zweite Sensoreinheit 45 auf. Der Bediener kann einstellen, ob die Messung mit der ersten Sensoreinheit 44, der zweiten Sensoreinheit 45 oder der ersten und zweiten Sensoreinheit 44, 45 durchgeführt werden soll. FIG. 4 zeigt eine Messaufnahme, die mit der ersten Sensoreinheit 44 aufgenommen wurde.

Das Display 30 ist während der Anzeige einer Messaufnahme im ersten Betriebsmodus in drei Hauptfelder unterteilt: Am linken Rand des Displays 30 ist in einem ersten Hauptfeld **60** ein Funktionsmenü dargestellt, das bis zu fünf Funktionen **61A-61E** enthält. Jede Funktion 61A-61 E wird durch die links liegende Funktionstaste 36A-36E der zweiten Bedienungseinheit 31 B aktiviert. Ein zweites Hauptfeld **62** ist im mittleren Bereich des Displays 30 angeordnet und dient zur Darstellung der Messaufnahme. Das zweite Hauptfeld 62 ist im ersten Betriebsmodus in drei Teilbereiche unterteilt ist, die untereinander angeordnet sind: In einem oberen Teilbereich **63** ist eine Draufsicht gezeigt, in einem mittleren Teilbereich **64** ein Tiefenschnittbild und in einem unteren Teilbereich **65** eine zugehörige Messskala. Am rechten Rand des Displays 30 sind in einem dritten Hauptfeld **66** verschiedene Informationen für den Bediener dargestellt. Das dritte Hauptfeld 66 ist in einen oberen Statusbereich **67** und einen unteren Informationsbereich **68** unterteilt. Der Statusbereich 67 enthält unter anderem Informationen über einen Ladezustand der Spannungsquelle 46 oder eine Speicherkarte, wobei die Informationen in Form von Piktogrammen im Statusbereich 67 angezeigt werden. Im Informationsbereich 68 werden aktuelle Koordinaten der Messaufnahme angezeigt.

Ein Tiefenschnittbild ist eine zweidimensionale Darstellung der Messergebnisse in einer Ebene, die senkrecht zur XY-Ebene verläuft; auf der vertikalen Achse des Tiefenschnittbildes sind die Tiefenrichtung und auf der horizontalen Achse eine horizontale Richtung in der XY-Ebene aufgetragen. Bei einer linearen Vorschubbewegung entspricht die horizontale Richtung insbesondere der Vorschubrichtung; bei einer gehaltenen Detektionsvorrichtung oder der Bewegung einer geführten Detektionsvorrichtung entlang einer beliebigen Bahn entspricht die horizontale Richtung insbesondere einer durch die Detektionsvorrichtung festgelegten Vorzugsrichtung, beispielsweise einer Gehäusekante. In dem Tiefenschnittbild werden Rohdaten, d.h. die als Hyperbeln ausgebildeten Empfangssignale, oder weiterverarbeitete Empfangssignale dargestellt. Die Empfangssignale werden mit Hilfe von Bildverarbeitungsund Mustererkennungsverfahren bearbeitet, um Informationen über die Objekte im Untergrund zu gewinnen. In Tiefenschnittbildern, die weiterverarbeitete Empfangssignale verwenden, werden die Objekte geometrisch als Objekte dargestellt; die Form und Größe der Objekte wird durch unterschiedliche Farben angezeigt.

Eine Draufsicht ist eine zweidimensionale Darstellung der Messergebnisse in der XY-Ebene, die aus den Tiefenschnittbildern als Mittelwert, Median, Maximalwert, gewichtete Summe oder sonstige geeignete mathematische Funktion über einen Tiefenbereich zwischen einer ersten und zweiten Tiefe berechnet wird. Dabei wird der Tiefenbereich über die erste und zweite Tiefe oder über eine Schichttiefe und eine Schichtdicke festgelegt. Der Tiefenbereich, über den die Draufsicht gemittelt wird, ist über die Schaltwippe 33 der ersten Bedienungseinheit 31A verstellbar ausgebildet. In der Draufsicht sind nur diejenigen Objekte dargestellt, die innerhalb des eingestellten Tiefenbereichs liegen. Alle anderen Objekte, die sich außerhalb des eingestellten Tiefenbereichs befinden, werden in der Draufsicht nicht dargestellt.

Der mittlere Teilbereich 64 zeigt ein erstes Tiefenschnittbild **69.1** des Empfangskanals 52.1, bei dem die Objekte im Untergrund durch Mustererkennung identifiziert wurden; das Eisengitter 8 ist im Querschnitt zu erkennen. Das Tiefenschnittbild wird von der Tiefenrichtung Z als vertikaler Achse und der Vorschubrichtung 28 als horizontaler Achse aufgespannt. Neben dem ersten Tiefenschnittbild 69.1 des ersten Empfangskanals 52.1 sind weitere Tiefenschnittbilder **69.2-69.5** für die weiteren Empfangskanäle 52.2-52.5 hinterlegt. Der Übergang zwischen den Tiefenschnittbildern 69.1-69.5 bleibt unbearbeitet oder wird mit bekannten Interpolationsmethoden interpoliert. Der Bediener kann mittels der Schaltwippe 33 zwischen den Tiefenschnittbildern 69.1-69.5 hin- und herwechseln.

Der obere Teilbereich 63 zeigt eine Draufsicht **70,** die aus den Tiefenschnittbildern 69.1-69.5 über einen Tiefenbereich zwischen einer ersten Tiefe **z** und einer zweiten Tiefe **z + Δz** berechnet wurde. Über Mustererkennungsverfahren wurden die Gitterstäbe des Eisengitters 8 in den gemittelten Empfangssignalen erkannt und als Gitterstäbe in der Draufsicht 70 dargestellt. Der Bediener kann bei der Farbdarstellung der Tiefenschnittbilder 69.1-69.5 und der Draufsicht 70 zwischen mehreren Farbschemata wählen. Die Farbschemata dienen zur unterschiedlichen Darstellung und zur Anpassung an die Umgebungshelligkeit, sie haben keine weitere Funktion.

Im zweiten Hauptfeld 62 des Displays 30 sind mehrere vertikale und horizontale Markierungslinien angeordnet, die zum Teil über die Schaltwippe 33 verschiebbar sind. Die Schaltwippe 33 ist über das Funktionsmenü zwischen verschiedenen Einstellungen verstellbar; im Statusbereich 67 ist die aktuelle Einstellung der Schaltwippe 33 angezeigt. In einer ersten Einstellung sind die Schichttiefe z und die Schichtdicke Δz des Tiefenbereichs über die Schaltwippe 33 einstellbar. FIG. 4 zeigt eine durchgezogene, vertikale Markierungslinie **71,** zwei gepunktete, vertikale Markierungslinien **72A, 72B** sowie eine durchgezogene und eine gestrichelte, horizontale Markierungslinie **73, 74.** Die durchgezogene, vertikale Markierungslinie 71 kennzeichnet die Mitte des Detektionsfeldes und entspricht der Position der Markierungen 40A, 40B an der Ober- und Unterkante des Gehäuses 22. Die gepunktete, vertikale Markierungslinie 72A zeigt die rechte Gehäusekante und die gepunktete, vertikale Markierungslinie 72B die linke Gehäusekante des Gehäuses 22 der Detektionsvorrichtung 21 an. Die durchgezogene, horizontale Markierungslinie 73 legt die Schichttiefe z und die gestrichelte, horizontale Markierungslinie 74 die Schichtdicke Δz des Tiefenbereichs fest. Die aktuelle Positionsangabe für die Mitte des Detektionsfeldes (x), die Schichttiefe (z) und die Schichtdicke (Δz) sind im Informationsbereich 68 angezeigt. Die in FIG. 4 dargestellte Draufsicht ist über einen Tiefenbereich von 20 mm bis 80 mm gemittelt, die Schichttiefe z beträgt 20 mm und die Schichtdicke Δz beträgt 60 mm. Die Mitte des Detektionsfeldes befindet sich bei der X-Koordinate 0,96 m.

Wenn der Bediener die Messung mit der ersten und zweiten Sensoreinheit 44, 45 durchführt, kann er zwischen verschiedenen Anzeigemodi wählen. In einem ersten Anzeigemodus berechnet die Steuer- und Auswerteeinheit 46 aus den Empfangssignalen der ersten und zweiten Sensoreinheiten 44, 45 getrennte Tiefenschnittbilder und Draufsichten, die gleichzeitig oder nacheinander auf der Anzeigeeinheit 26 angezeigt werden. In einem zweiten Anzeigemodus berechnet die Steuer- und Auswerteeinheit 46 aus den Empfangssignalen der ersten und zweiten Sensoreinheiten 44, 45 gemeinsame Tiefenschnittbilder und eine gemeinsame Draufsicht.

**FIG. 5A****, B** zeigen die Detektionsvorrichtung 21 in einem zweiten Betriebsmodus, in dem die Detektionsvorrichtung 21 in mehreren parallelen Messbahnen in zwei senkrechten Vorschubrichtungen über den Untergrund bewegt wird. Die Messergebnisse der einzelnen Messbahnen werden automatisch zusammengefügt, um eine Messaufnahme für einen größeren Flächenbereich zu erhalten.

FIG. 5A zeigt schematisch die Anordnung der Messbahnen auf dem Untergrund. Um die Messbahnen möglichst genau zueinander auszurichten, wird ein Messraster auf den Untergrund geklebt oder das Messraster wird direkt auf den Untergrund gezeichnet. Die Detektionsvorrichtung 21 wird in einer ersten Vorschubrichtung **75** in mehreren parallelen Messbahnen **76.1-76.6** über den Untergrund bewegt. Anschließend wird die Detektionsvorrichtung 21 in einer zweiten Vorschubrichtung **77,** die senkrecht zur ersten Vorschubrichtung 75 verläuft, in mehreren parallelen Messbahnen **78.1-78.6** über den Untergrund bewegt.

FIG. 5B zeigt das Display 30 der Detektionsvorrichtung 21 mit einer Messaufnahme, die im zweiten Betriebsmodus erstellt wurde. Die Messaufnahme kann während und nach der Messung mit Hilfe verschiedener Darstellungsparameter auf unterschiedliche Weise dargestellt werden. Das zweite Hauptfeld 62 des Displays 30 ist im zweiten Betriebsmodus der Detektionsvorrichtung 21 in vier Teilbereiche unterteilt, die in Form eines Rechteckes angeordnet sind. In einem linken, oberen Teilbereich **81** ist eine Draufsicht gezeigt, in einem rechten, oberen Teilbereich **82** ein erstes Tiefenschnittbild, in einem linken, unteren Teilbereich **83** ein zweites Tiefenschnittbild und in einem rechten, unteren Teilbereich **84** eine zugehörige Messskala für das erste und zweite Tiefenschnittbild.

Das erste Tiefenschnittbild im rechten, oberen Teilbereich 82 zeigt ein Tiefenschnittbild **85.1,** das von der Tiefenrichtung Z und der zweiten Vorschubrichtung 77 aufgespannt ist. Senkrecht zur zweiten Vorschubrichtung 77, d.h. in Richtung der ersten Vorschubrichtung 75, sind weitere Tiefenschnittbilder **85.2-85.30** hinterlegt; sechs parallele Messbahnen 76.1-76.6 und fünf Empfangskanäle pro Messbahn ergeben 30 Tiefenschnittbilder. Das zweite Tiefenschnittbild im linken, unteren Teilbereich 83 zeigt ein Tiefenschnittbild **86.1,** das von der Tiefenrichtung Z und der ersten Vorschubrichtung 75 aufgespannt ist. Senkrecht zur ersten Vorschubrichtung 75, d.h. in Richtung der zweiten Vorschubrichtung 77, sind weitere Tiefenschnittbilder **86.2-86.30** hinterlegt; sechs parallele Messbahnen 78.1-78.6 und fünf Empfangskanäle pro Messbahn ergeben 30 Tiefenschnittbilder. Der linke, obere Teilbereich 81 zeigt eine Draufsicht **87,** die aus den ersten und/oder zweiten Tiefenschnittbildern zwischen der ersten Tiefe z und der zweiten Tiefe z + Δz berechnet wurde. Die in FIG. 5B dargestellte Draufsicht 87 ist über einen Tiefenbereich von 40 mm bis 75 mm gemittelt, die Schichttiefe z beträgt 40 mm und die Schichtdicke Δz beträgt 35 mm.

In den Tiefenschnittbildern 85.1, 86.1 sind eine durchgezogene Markierungslinie **88** und eine gestrichelte Markierungslinie **89** angeordnet, die über die Schaltwippe 33 verschiebbar sind. Die durchgezogene Markierungslinie 88 legt die Schichttiefe z und die gestrichelte Markierungslinie 89 die Schichtdicke Δz des Tiefenbereichs fest. Im Informationsbereich 68 sind die aktuellen Positionsangaben für das Fadenkreuz (Schaltwippe) und für die Tiefenschnittbilder in X- und Y-Richtung (x, y), die Schichttiefe (z) und die Schichtdicke (Δz) angezeigt.

**FIG. 6A** zeigt eine erste Ausführungsform einer Sensoreinheit **101** mit vier Sensorelementen **102.1-102.4,** die regelmässig in zwei Reihen und zwei Spalten angeordnet sind. Jedes Sensorelement 102.1-102.4 arbeitet im Sendemodus als Sendeelement und im Empfangsmodus als Sensorelement. Wenn die vier Sensorelemente 102.1-102.4 wie beschrieben von der Steuer- und Auswerteeinheit 46 so gesteuert werden, dass jeweils ein Sensorelement sendet und alle Sensorelemente empfangen und dieser Vorgang für alle Sensorelemente durchgeführt wird, ergibt sich ein Empfangsfeld mit neun Empfangsbereichen.

Die neun Empfangsbereiche lassen sich in drei Kategorien von Empfangsbereichen einteilen. Jedem Sensorelement 102.1-102.4 ist ein monostatischer Empfangsbereich **103.1-103.4,** der jeweils das monostatische Empfangssignal darstellt, direkt zugeordnet; es ergeben sich vier monostatische Empfangsbereiche 103.1-103.4. Zwischen zwei, in einer Reihe oder einer Spalte benachbarten Sensorelementen befindet sich jeweils ein Empfangsbereich **104.1-104.4,** in dem ein gemitteltes Signal der beiden bistatischen Empfangssignale dargestellt wird; bei vier Sensorelementen 102.1-102.4 entstehen auf diese Weise vier Empfangsbereiche 104.1-104.4. Zwischen vier, rechteckig zueinander angeordneten Sensorelementen entsteht im Bereich des Mittelpunktes ein weiterer Empfangsbereich **105,** in dem ein gemitteltes Signal der vier bistatischen Empfangssignale dargestellt wird; bei vier Sensorelementen 102.1-102.4 entsteht auf diese Weise ein weiterer Empfangsbereich 105.

Die Sensoreinheit 101 eignet sich zum Einsatz in einer gehaltenen Detektionsvorrichtung. Die Sensorelemente 102.1-102.4 sind in senkrechten Reihen und Spalten entlang einer ersten horizontalen Richtung **106** und entlang einer zweiten horizontalen Richtung **107** angeordnet; als Tiefenrichtung **108** ist die zu den horizontalen Richtungen 106, 107 senkrechte Richtung in den Untergrund definiert. Aus den monostatischen und bistatischen Empfangssignalen lassen sich in der ersten und zweiten Richtung 106, 107 Tiefenschnittbilder berechnen, die in FIG. 6A schematisch dargestellt sind. Neben den Tiefenschnittbildern wird eine Draufsicht berechnet, die aus den Tiefenschnittbildern in der ersten und/oder zweiten Richtung 106, 107 oder direkt aus den neun Empfangsbereichen über einen Tiefenbereich zwischen einer ersten und zweiten Tiefe berechnet wird.

Die Tiefenschnittbilder in der ersten horizontalen Richtung 106 werden von der Tiefenrichtung 108 als vertikaler Achse und der ersten horizontalen Richtung 106 als horizontaler Achse aufgespannt. In der ersten horizontalen Richtung 106 wird aus den drei Empfangsbereichen 103.1, 104.1, 103.2 ein erstes horizontales Tiefenschnittbild **109.1,** aus den drei Empfangsbereichen 104.2, 105, 104.3 ein zweites horizontales Tiefenschnittbild **109.2** und aus den drei Empfangsbereichen 103.3, 104.4, 103.4 ein drittes horizontales Tiefenschnittbild **109.3** berechnet. Die Tiefenschnittbilder in der zweiten horizontalen Richtung 107 werden von der Tiefenrichtung 108 als vertikaler Achse und der zweiten horizontalen Richtung 107 als horizontaler Achse aufgespannt. In der zweiten horizontalen Richtung 107 wird aus den drei Empfangsbereichen 103.1, 104.2, 103.3 ein erstes vertikales Tiefenschnittbild **110.1,** aus den drei Empfangsbereichen 104.1, 105, 104.4 ein zweites vertikales Tiefenschnittbild **110.2** und aus den drei Empfangsbereichen 103.2, 104.3, 103.4 ein drittes vertikales Tiefenschnittbild **110.3** berechnet.

Die drei Empfangsbereiche 103.1, 104.1, 103.2 bilden einen ersten horizontalen Empfangskanal **111.1,** die drei Empfangsbereiche 104.2, 105, 104.3 einen zweiten horizontalen Empfangskanal **111.2** und die drei Empfangsbereiche 103.3, 104.4, 103.4 einen dritten horizontalen Empfangskanal **111.3.** Die drei Empfangsbereiche 103.1, 104.2, 103.3 bilden einen ersten vertikalen Empfangskanal **112.1,** die drei Empfangsbereiche 104.1, 105, 104.4 einen zweiten vertikalen Empfangskanal **112.2** und die drei Empfangsbereiche 103.2, 104.3, 103.4 einen dritten vertikalen Empfangskanal **112.3.**

**FIG. 6B** zeigt eine zweite Ausführungsform einer Sensoreinheit **121** mit fünf Sensorelementen **122.1-122.5** in einer verschachtelten Anordnung. Jedes Sensorelement 122.1-122.5 arbeitet im Sendemodus als Sendeelement und im Empfangsmodus als Empfangselement. Die fünf Sensorelemente 122.1-122.5 ergeben ein Empfangsfeld mit 13 Empfangsbereichen.

Die Empfangsbereiche lassen sich in vier Kategorien von Empfangsbereichen einteilen. Jedem Sensorelement 122.1-122.5 ist ein monostatischer Empfangsbereich **123.1-123.5,** der das jeweilige monostatische Empfangssignal darstellt, zugeordnet; es ergeben sich fünf monostatische Empfangsbereiche 123.1-123.5. Zwischen zwei, in einer Reihe benachbarten Sensorelementen befindet sich jeweils ein Empfangsbereich **124.1, 124.2,** in dem ein gemitteltes Signal der beiden bistatischen Empfangssignale dargestellt wird; bei fünf Sensorelementen 122.1-122.5 entstehen auf diese Weise zwei Empfangsbereiche 124.1, 124.2. Zwischen zwei, in einer Diagonalen angeordneten Sensorelementen befindet sich jeweils ein Empfangsbereich **125.1-125.4,** in dem ein gemitteltes Signal der beiden bistatischen Empfangssignale dargestellt wird; bei fünf Sensorelementen 122.1-122.5 entstehen auf diese Weise vier Empfangsbereiche 125.1-125.4. Zwischen zwei Sensorelementen, die in Reihen mit der gleichen Anordnung angeordnet sind, befindet sich jeweils ein Empfangsbereich **126.1, 126.2,** in dem ein gemitteltes Signal der beiden bistatischen Empfangssignale dargestellt wird; bei fünf Sensorelementen 122.1-122.5 entstehen auf diese Weise zwei Empfangsbereiche 126.1, 126.2.

Die Sensoreinheit 121 eignet sich unter anderem zum Einsatz in einer gehaltenen Detektionsvorrichtung. Die Sensorelemente 122.1-122.5 sind entlang einer ersten horizontalen Richtung **127** und entlang einer zweiten horizontalen Richtung **128** angeordnet; als Tiefenrichtung **129** ist die zu den horizontalen Richtungen 127, 128 senkrechte Richtung in den Untergrund definiert. Aus den Empfangssignalen lassen sich in der ersten und zweiten horizontalen Richtung 127, 128 Tiefenschnittbilder berechnen, die in FIG. 6B schematisch dargestellt sind. Neben den Tiefenschnittbildern wird eine Draufsicht berechnet, die aus den Tiefenschnittbildern in der ersten und/oder zweiten horizontalen Richtung 127, 128 oder direkt aus den neun Empfangsbereichen über einen Tiefenbereich zwischen einer ersten und zweiten Tiefe berechnet wird.

Die Tiefenschnittbilder in der ersten horizontalen Richtung 127 werden von der Tiefenrichtung 129 als vertikaler Achse und der ersten horizontalen Richtung 127 als horizontaler Achse aufgespannt. In der ersten horizontalen Richtung 127 wird aus den drei Empfangsbereichen 123.1, 124.1, 123.2 ein erstes Tiefenschnittbild **130.1,** aus den zwei Empfangsbereichen 125.1, 125.2 ein zweites Tiefenschnittbild **130.2,** aus den drei Empfangsbereichen 126.1, 123.3, 126.2 ein drittes Tiefenschnittbild **130.3,** aus den zwei Empfangsbereichen 125.3, 125.4 ein viertes Tiefenschnittbild **130.4** und aus den drei Empfangsbereichen 123.4, 124.2, 123.5 ein fünftes Tiefenschnittbild **130.5** berechnet. Die Tiefenschnittbilder in der zweiten horizontalen Richtung 128 werden von der Tiefenrichtung 129 als vertikaler Achse und der zweiten horizontalen Richtung 128 als horizontaler Achse aufgespannt. In der zweiten horizontalen Richtung 128 wird aus den drei Empfangsbereichen 123.1, 126.1, 123.4 ein erstes Tiefenschnittbild **131.1,** aus den zwei Empfangsbereichen 125.1, 125.3 ein zweites Tiefenschnittbild **131.2,** aus den drei Empfangsbereichen 124.1, 123.3, 124.2 ein drittes Tiefenschnittbild **131.3,** aus den zwei Empfangsbereichen 125.2, 125.4 ein viertes Tiefenschnittbild **131.4** und aus den drei Empfangsbereichen 123.2, 126.2, 123.5 ein fünftes Tiefenschnittbild **131.5** berechnet.

Die drei Empfangsbereiche 123.1, 124.1, 123.2 bilden einen ersten horizontalen Empfangskanal **132.1,** die zwei Empfangsbereiche 125.1, 125.2 einen zweiten horizontalen Empfangskanal **132.2,** die drei Empfangsbereiche 126.1, 123.2, 126.2 einen dritten horizontalen Empfangskanal **132.3,** die zwei Empfangsbereiche 125.3, 125.4 einen vierten horizontalen Empfangskanal **132.4** und die drei Empfangsbereiche 123.3, 124.2, 123.5 einen fünften horizontalen Empfangskanal **132.5.** Die drei Empfangsbereiche 123.1, 126.1, 123.4 bilden einen ersten vertikalen Empfangskanal **133.1,** die zwei Empfangsbereiche 125.1, 125.3 einen zweiten vertikalen Empfangskanal **133.2,** die drei Empfangsbereiche 124.1, 123.3, 124.2 einen dritten vertikalen Empfangskanal **133.3,** die zwei Empfangsbereiche 125.2, 125.4 einen vierten vertikalen Empfangskanal **133.4** und die drei Empfangsbereiche 123.2, 126.2, 123.5 einen fünften vertikalen Empfangskanal **133.5.**

Die Sensoreinheiten 101, 121 können neben einer gehaltenen Detektionsvorrichtung auch in einer geführten Detektionsvorrichtung eingesetzt werden. Bei einer geführten Detektionsvorrichtung, die entlang einer beliebigen Bahn bewegt wird, werden vom Gerätehersteller zwei senkrechte Richtungen in der XY-Ebene definiert, beispielsweise Richtungen, die durch die Anordnungen der Sensorelemente bevorzugt sind. Die von den Sensorelementen erfassten Empfangssignale werden in der XY-Ebene den mit einer Koordinatenerfassungseinheit erfassten X- und Y-Koordinaten zugeordnet. Die Tiefenschnittbilder werden entlang der beiden senkrechten Richtungen berechnet. Aus den Tiefenschnittbildern oder direkt aus den Empfangssignalen wird eine Draufsicht berechnet und auf der Anzeigeeinheit dargestellt.

## Patentansprüche

1. Verfahren zum Detektieren eines Objektes (8, 11, 12.1-12.3) in einem Untergrund (3, 6), aufweisend die Schritte
Empfangen mindestens eines von den Eigenschaften des Objektes (8, 11, 12.1-12.3) und des Untergrundes (3, 6) abhängigen Empfangssignals (52.1) durch ein Sensorelement (48.1; 102.1; 122.1) einer Sensoreinheit (44; 101; 121),
Berechnen eines Tiefenschnittbildes (69.1; 85.1, 86.1) aus dem mindestens einen Empfangssignal (52.1) durch eine Steuer- und Auswerteeinheit (46) und
Anzeigen des Tiefenschnittbildes (69.1; 85.1, 86.1) auf einer Anzeigeeinheit (26), **gekennzeichnet durch** die weiteren Schritte
gleichzeitiges Empfangen mindestens eines weiteren Empfangssignals (52.2-52.5) **durch** mindestens ein weiteres Sensorelement (48.2, 48.3; 102.2-102.4; 122.2-122.5) der Sensoreinheit (44; 101; 121) und
gleichzeitiges Berechnen mindestens eines weiteren Tiefenschnittbildes (69.2-69.5; 85.2-85.5, 86.2-86.5) aus dem mindestens einen weiteren Empfangssignal (52.2-52.5) **durch** die Steuer- und Auswerteeinheit (46).

2. Verfahren nach Anspruch 1, **dadurch gekennzeichnet, dass** aus den Tiefenschnittbildern (69.1-69.5; 85.1-85.30, 86.1-86.30; 109.1-109.3, 110.1-110.3; 130.1-130.5, 131.1-131.5) eine Draufsicht (70; 87) berechnet und auf der Anzeigeeinheit (26) dargestellt wird, wobei die Draufsicht (70; 87) als Mittelwert, Median, Maximalwert oder gewichtete Summe über einen Tiefenbereich zwischen einer ersten Tiefe (z) und einer zweiten Tiefe (z + Δz) berechnet wird.

3. Verfahren nach Anspruch 2, **dadurch gekennzeichnet, dass** in der Draufsicht (70; 87) nur Objekte dargestellt werden, die einen Schwellwert überschreiten.

4. Verfahren nach einem der Ansprüche 2 bis 3, **dadurch gekennzeichnet, dass** die Tiefenschnittbilder (69.1-69.5; 85.1-85.30, 86.1-86.30; 109.1-109.3, 110.1-110.3; 130.1-130.5, 131.1-131.5) interpoliert werden.

5. Verfahren nach einem der Ansprüche 1 bis 4, **dadurch gekennzeichnet, dass** die Sensoreinheit (44) in einer ersten Vorschubrichtung (75) und einer zweiten Vorschubrichtung (77) in parallelen Messbahnen (76.1-76.6, 78.1-78.6) über den Untergrund (3, 6) bewegt wird, wobei in der ersten und zweiten Vorschubrichtung (75, 77) aus den Empfangssignalen mehrere Tiefenschnittbilder (85.1-85.30, 86.1-86.30) berechnet werden.

6. Verfahren nach Anspruch 5, **dadurch gekennzeichnet, dass** aus den Tiefenschnittbildern (85.1-85.30, 86.1-86.30) der ersten und zweiten Vorschubrichtung (75, 77) eine gemeinsame Draufsicht (87) berechnet und auf der Anzeigeeinheit (26) dargestellt wird.

7. Verfahren nach einem der Ansprüche 1 bis 6, **dadurch gekennzeichnet, dass** weitere Empfangssignale durch Sensorelemente (53, 54) einer weiteren Sensoreinheit (45) empfangen werden.

8. Verfahren nach Anspruch 7, **dadurch gekennzeichnet, dass** aus den Empfangssignalen der Sensoreinheit (44) und den Empfangssignalen der weiteren Sensoreinheit (45) durch die Steuer- und Auswerteeinheit (46) gemeinsame Tiefenschnittbilder und aus den gemeinsamen Tiefenschnittbildern eine gemeinsame Draufsicht berechnet werden.

9. Verfahren nach Anspruch 7, **dadurch gekennzeichnet, dass** aus den Empfangssignalen der Sensoreinheit (44) und den Empfangssignalen der weiteren Sensoreinheit (45) durch die Steuer- und Auswerteeinheit (46) getrennte Tiefenschnittbilder und aus den getrennten Tiefenschnittbildern getrennte Draufsichten berechnet werden.

10. Vorrichtung (1; 21) zum Detektieren eines Objektes (8, 11, 12.1-12.3) in einem Untergrund (3, 6) aufweisend
eine Sensoreinheit (44) mit einem Sensorelement (48.1), das zum Empfangen mindestens eines von den Eigenschaften des Objektes (8, 11, 12.1-12.3) und des Untergrundes (3, 6) abhängigen Empfangssignals (52.1) ausgebildet ist,
eine Steuer- und Auswerteeinheit (46), die zum Steuern der Sensoreinheit (44) und zum Berechnen eines Tiefenschnittbildes (69.1; 85.1, 86.1) aus den Empfangssignalen (52.1) ausgebildet ist, und
eine Anzeigeeinheit (26), die zur Anzeige des von der Steuer- und Auswerteeinheit (46) berechneten Tiefenschnittbildes (69.1; 85.1, 86.1) ausgebildet ist,
**dadurch gekennzeichnet, dass**
die Sensoreinheit (44) mindestens ein weiteres Sensorelement (48.2, 48.3; ) aufweist und die Steuer- und Auswerteeinheit (46) ausgebildet ist, aus den Empfangssignalen (52.1-52.5) der Sensorelemente (48.1-48.3) gleichzeitig Tiefenschnittbilder (69.1-69.5; 85.1-85.5, 86.1-86.5) zu berechnen.

11. Vorrichtung nach Anspruch 10, **dadurch gekennzeichnet, dass** die Steuer- und Auswerteeinheit (46) ausgebildet ist, aus den Tiefenschnittbildern (69.1-69.5; 85.1-85.30, 86.1-86.30; 109.1-109.3, 110.1-110.3; 130.1-130.5, 131.1-131.5) eine Draufsicht (70; 87) als Mittelwert, Median, Maximalwert oder gewichtete Summe über einen Tiefenbereich zwischen einer ersten Tiefe (z) und einer zweiten Tiefe (z + Δz) zu berechnen und auf der Anzeigeeinheit (26) darzustellen.

12. Vorrichtung nach Anspruch 11, **dadurch gekennzeichnet, dass** die erste Tiefe (z) und die zweite Tiefe (z + Δz) verstellbar ausgebildet sind.

13. Vorrichtung nach Anspruch 11, **dadurch gekennzeichnet, dass** ein horizontaler Flächenbereich, in dem die Draufsicht (70; 87) dargestellt ist, verstellbar ausgebildet ist, wobei der Flächenbereich in einer ersten und zweiten horizontalen Richtung (X, Y) getrennt verstellbar ist.

14. Vorrichtung nach einem der Ansprüche 11 bis 13, **dadurch gekennzeichnet, dass** mindestens ein Tiefenschnittbild (69.1; 85.1, 86.1) und die Draufsicht (70; 87) gleichzeitig auf der Anzeigeeinheit (26) darstellbar sind.

15. Vorrichtung nach Anspruch 14, **dadurch gekennzeichnet, dass** das auf der Anzeigeeinheit (26) dargestellte Tiefenschnittbild (69.1; 85.1, 86.1) über eine Schaltwippe (33) verstellbar ist, wobei die Position der Schaltwippe (33) in der Draufsicht (70; 87) dargestellt ist.

16. Vorrichtung nach einem der Ansprüche 10 bis 15, **dadurch gekennzeichnet, dass** eine erste Sensoreinheit (44) mit ersten Sensorelementen (48.1, 48.2, 48.3) und eine zweite Sensoreinheit (45) mit zweiten Sensorelementen (53.1-53.4, 54.1-54.3) vorgesehen sind, wobei sich die zweiten Sensorelemente (53.1-53.4, 54.1-54.3) in mindestens einer Sensoreigenschaft von den ersten Sensorelementen (48.1, 48.2, 48.3) unterscheiden.

17. Vorrichtung nach Anspruch 16, **dadurch gekennzeichnet, dass** die erste Sensoreinheit (44) zur Detektion eines beliebigen Objektes (8, 11, 12.1-12.3) und die zweite Sensoreinheit (45) zur Detektion einer Stromleitung (11, 12.1-12.3) ausgebildet sind.

18. Vorrichtung nach einem der Ansprüche 16 bis 17, **dadurch gekennzeichnet, dass** in einem ersten Anzeigemodus die Messergebnisse der ersten Sensoreinheit (44), in einem zweiten Anzeigemodus die Messergebnisse der zweiten Sensoreinheit (45) und in einem dritten Anzeigemodus die Messergebnisse der ersten und zweiten Sensoreinheit (44, 45) auf der Anzeigeeinheit (26) darstellbar sind.
